# EUROPEAN PATENT APPLICATION

(11) **EP 1 926 162 A1**
(43) Date of publication of application: **28.05.2008**
(21) Application number: 07121484.5
(22) Date of filing: 26.11.2007
(51) Int. Cl.: H01M 4/36

(54) **Cathode having multiple layers for a lithium ion battery, battery assembly, vehicle, and method of manufacturing a cathode having multiple layers**

(30) Priority: 27.11.2006 JP 2006318780
(71) Applicant: NISSAN MOTOR CO., LTD., Yokohama-shi, Kanagawa 221-0023 (JP)
(72) Inventor: Hisamitsu, Yasunari c/o Nissan Motor Co. Ltd., Atsugi-shi, Kanagawa 243-0123 (JP); Shimamura, Osamu c/o Nissan Motor Co. Ltd,, Atsugi-shi, Kanagawa 243-0123 (JP); Miyatake, Kazuki c/o Nissan Motor Co. Ltd,, Atsugi-shi, Kanagawa 243-0123 (JP); Horie, Hideaki c/o Nissan Motor Co. Ltd,, Atsugi-shi, Kanagawa 243-0123 (JP)
(74) Representative: Holmes, Matthew William

(57) **Abstract**

A lithium ion battery is disclosed that will withstand a temperature rise and is further capable of extracting energy for extended battery life. The lithium ion battery is provided with a cathode electrode comprising an electrolytic solution type cathode layer having a first cathode material and a first electrolyte containing electrolytic solution in its support medium. The lithium ion battery is further provided with a gas absorbing reinforcing cathode layer, which can include a second cathode material with heat stability lower than the first cathode material and a polymer cathode layer capable of trapping the gas generated from the second cathode material.

## Description

The invention generally relates to a lithium ion battery, a battery assembly, a battery assembly module, a vehicle and a method of manufacturing a cathode electrode of the lithium ion battery. Aspects of the invention relate to a battery, to a battery assembly, to a battery assembly module, to a vehicle and to a method.

High-capacity batteries are capable of generating electricity for long periods of time. These batteries also produce much energy. Thus, when there is a malfunction, such as an external short circuit, the batteries self-heat. Cathode material with high capacity per unit weight consists of lithium nickel containing oxide, lithium cobalt containing oxide, or multi-component oxide containing nickel or cobalt. The oxides generate oxygen at relatively low temperatures, and when the temperature is increased, the battery tends to deteriorate due to its coexistence with a gasificated electrolytic solution. The capacity loss manifests itself in increased internal resistance caused by oxidation. Eventually, the cell resistance reaches a point where the battery can no longer deliver the stored energy although the battery may still have ample charge. The battery may also expand due to the generation of oxygen.

In this regard, Japanese Laid-Open Patent Publication No. (Hei.) 11-191400 discloses a battery comprising a gas absorbing container. However, when a gas absorbent is used in a container, a deficiency in terms of gas trapping function exists due to the space between a wall of the container and the gas generating region.

It is an aim of the invention to address the above issues and to improve upon known technology. Embodiments of the invention may provide batteries that can withstand the high temperatures and gas produced by the electrolytic solution without deterioration and deformation of the batteries. Other aims and advantages of the invention will become apparent from the following description, claims and drawings.

Aspects of the invention therefore provide a battery, a battery assembly module and a method as claimed in the appended claims.

According to another aspect of the invention for which protection is sought there is provided a lithium ion battery, comprising an anode electrode, a cathode electrode including an electrolytic solution type cathode layer and a gas absorbing reinforcing cathode layer and an electrolyte layer between the anode electrode and cathode electrode, the electrolyte layer including an electrolytic solution in a support medium.

In an embodiment, the electrolytic solution type cathode layer is in contact with the electrolyte layer opposite the anode electrode.

In an embodiment, the electrolytic solution type cathode layer comprises a first cathode material and an electrolytic solution; and wherein the gas absorbing reinforcing cathode layer comprises a polymer cathode layer and a second cathode material, the first cathode material having a higher heat stability than the second cathode material.

In an embodiment, the electrolytic solution type cathode layer comprises a first cathode material and an electrolytic solution; and wherein the gas absorbing reinforcing cathode layer comprises a polymer cathode layer and a second cathode material, the first cathode material having a higher heat stability than the second cathode material.

In an embodiment, the polymer cathode layer contains an all-solid polymer.

In an embodiment, the polymer cathode layer contains a first solid polymer with an ion conductivity and a second solid polymer without an ion conductivity.

In an embodiment, the polymer cathode layer contains a gel polymer.

In an embodiment, the cathode electrode further comprises a gap layer between the electrolytic solution type cathode layer and the gas absorbing reinforcing cathode layer.

In an embodiment, the gap layer comprises a second polymer cathode layer and a third cathode material; and wherein the third cathode material has a same heat stability as the first cathode material.

In an embodiment, the polymer cathode layer and the second polymer cathode layer are gel polymers.

In an embodiment, the polymer cathode layer and the second polymer cathode layers are solid polymers.

In an embodiment, the polymer cathode layer is a gel polymer.

In an embodiment, the polymer cathode layer is a solid polymer.

According to a further aspect of the invention for which protection is sought there is provided a battery assembly comprising a plurality of lithium ion batteries such as set out above connected in serial-parallel.

According to a still further aspect of the invention for which protection is sought there is provided a battery assembly module comprising more than one battery assembly connected in serial-parallel.

According to another aspect of the invention for which protection is sought there is provided a vehicle comprising a battery assembly module as set out above.

According to yet another aspect of the invention for which protection is sought there is provided a method of manufacturing a cathode electrode of a lithium ion battery, the method comprising applying a precursor solution of a gas absorbing reinforcing cathode layer on a collection foil, drying the applied precursor solution of the gas absorbing reinforcing cathode layer, applying a precursor solution of an electrolytic solution type cathode layer and drying the applied precursor solution of the electrolytic solution type cathode layer.

In an embodiment, the gas absorbing reinforcing cathode layer comprises a gel polymer layer, and the method comprises applying and impregnating a gel polymer precursor solution into an electrode material and heating prior to applying the precursor solution of the gas absorbing reinforcing cathode layer to the collection foil.

For example, a lithium ion battery may comprise an anode electrode, a cathode electrode including an electrolytic solution type cathode layer and a gas absorbing reinforcing cathode layer and an electrolyte layer between the anode electrode and cathode electrode. The electrolyte layer includes an electrolytic solution in a support medium.

Embodiments of lithium ion batteries taught herein can be combined to form a battery assembly and a battery assembly module. Further, a vehicle is taught herein that employs a battery assembly module taught herein.

In another example, a method of manufacturing embodiments of a cathode electrode of the lithium ion battery may comprise applying a precursor solution of a gas absorbing reinforcing cathode layer on a collection foil, drying the applied precursor solution of the gas absorbing reinforcing cathode layer, applying a precursor solution of an electrolytic solution type cathode layer and drying the applied precursor solution of the electrolytic solution type cathode layer.

Within the scope of this application it is envisaged that the various aspects, embodiments, examples, features and alternatives set out in the preceding paragraphs, in the claims and/or in the following description and drawings may be taken individually or in any combination thereof.

The present invention will now be described, by way of example only, with reference to the accompanying drawings in which:
FIG. 1 is a cross-sectional view of a lithium ion battery constructed in accordance with a first embodiment of the invention;
FIG. 2 is a schematic enlarged view of a main portion of the lithium ion battery shown in FIG. 1;
FIG. 3A is an explanatory view when an electrode formed by using a gel polymer is heated;
FIG. 3B is an explanatory view when an electrode for formed by using an electrolytic solution is heated;
FIG. 4A is a schematic enlarged view of a main portion showing a modified example of the lithium ion battery of the first embodiment;
FIG. 4B is a schematic enlarged view of a main portion showing another modified example of the lithium ion battery of the first embodiment;
FIG. 5 is a circuit diagram of a battery assembly constructed in accordance with a second embodiment of the invention;
FIG. 6 is a block diagram of a battery assembly module constructed in accordance with a third embodiment of the invention; and
FIG. 7 is a side view of a vehicle constructed in accordance with a fourth embodiment of the invention.

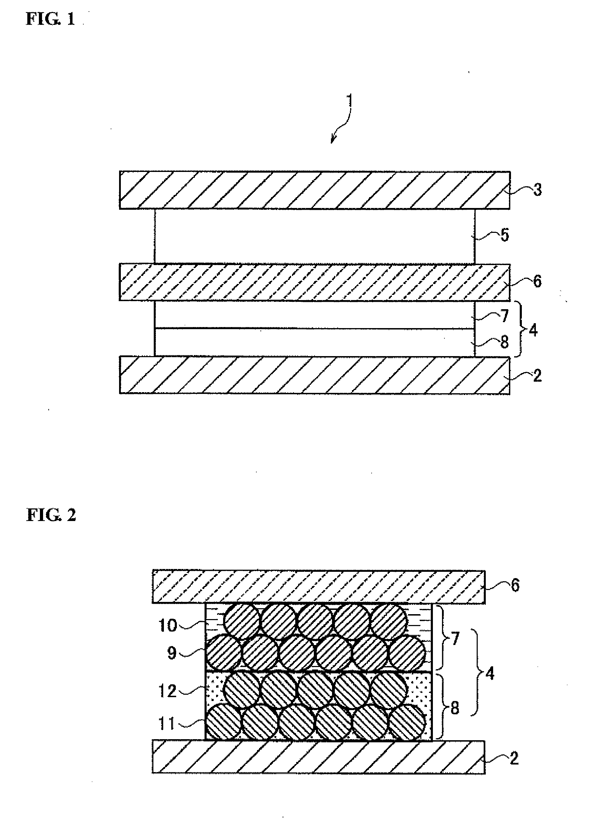

As shown in FIG. 1, the lithium ion battery 1 of a first embodiment is provided with a cathode collector 2 and an anode collector 3, which are parallel to each other. A cathode electrode 4 is formed along the inner side surface of the cathode collector 2. An anode electrode 5 is formed along an opposed inner side surface of the anode collector 3. Further, an electrolyte layer (separator) 6 is densely located between the cathode electrode 4 and the anode electrode 5, which are opposite from each other.

The cathode collector 2 comprises, for example, aluminum (AI). As shown in FIG. 2, the cathode electrode 4 formed on the cathode collector 2 comprises an electrolytic solution type cathode layer 7 that contacts the electrolyte layer 6 and a gas absorbing reinforcing cathode layer 8 that contacts the cathode collector 2. The electrolytic solution type cathode layer 7 comprises a first cathode material 9 (for example, LiFePO₄) having a high heat stability and an electrolytic solution 10 supported by a support medium. The gas absorbing reinforcing cathode layer 8 is provided with a second cathode material 11 (for example, an LiNiO₂ compound) having a heat stability lower than that of the first cathode material 9 and a polymer cathode layer 12 capable of trapping the gas generated from the second cathode material 11. Here, the gas contains oxygen as a main component.

The cathode electrode 4 of the lithium ion battery 1 is formed by using a method including several parts. In a first application process, a precursor solution is applied on a collection foil comprising aluminum. The precursor solution becomes the gas absorbing reinforcing cathode layer 8, and the collection foil becomes the cathode collector 2. In first drying process, the applied precursor solution of the gas absorbing reinforcing cathode layer 8 is dried. The next process is a second application process wherein a precursor solution is applied that becomes the electrolytic solution type cathode layer 7. In the following, second drying process, the applied precursor solution of the electrolytic solution cathode layer 7 is dried.

The anode collector 3 comprises, for example, copper (Cu). The anode electrode 5 formed on the anode collector 3 includes an anode active material, an electrolyte support salt and a polymer. The anode active material is selected from the group consisting of hard carbon, graphite carbon, metal compounds, Li metal compounds, Li metal oxides and combinations thereof. Further, the cathode collector 2 and the anode collector 3 may be formed, for example, from conductive materials such as aluminum, copper, stainless (SUS), titan, nickel, etc. However, they are certainly not limited thereto since any material used in a conventional secondary battery may be employed. A thickness of the collector may be with in a range of 10 to 50 µm.

The electrolyte layer 6 is prepared by sinking the electrolytic solution into a porous membrane. As for the porous membrane, conventional materials may be used without any specific limitations. For example, the porous membrane may include a porous membrane or nonwoven fabric or laminates of polyolefin-based resin such as microporous polyethylene film, microporous polypropylene film and microporous ethylene-propylene copolymer film. Such materials have a superior effect of restraining the reactivity with the electrolytic solution to a low value. In addition, the porous membrane may include a composite resin membrane that uses the polyolefin-based resin nonwoven fabric or polyolefin-based resin porous membrane as a reinforcing material layer reinforced by a layer of vinylidene fluoride resin compound.

In certain embodiments, the electrolytic solution may include at least one electrolyte salt including an inorganic acid anionic salt such as LiBOB (lithium bis oxide borate), LiPF₆, LiBF₄, LiClO₄, LiAsF₆, LiTaF₆, LiAlCl₄ and Li₂B₁₀Cl₁₀ or an organic acid anionic salt such as LiCF₃SO₃, Li(CF₃SO₂)₂N and Li(C₂F₅SO₂)₂N (and combinations thereof). Further, the electrolytic solution may use organic solvent (plasticizer) such as non-protonic solvent of one type or a combination of two or more types selected from: ring-type carbonate class such as propylene carbonate (PC), ethylene carbonate (EC), etc.; chain-type carbonate class such as dimethyl carbonate, methylethyl carbonate, diethyl carbonate, etc.; ether class such as tetrahydrofuran, 2-methyltetrahydrofuran, 1,4-dioxane, 1,2-dimetoxyethane, 1,2-dibutoxyethane, etc.; lactone class such as γ-butyrolactone, etc.; nitrile class such as acetonitrile, etc.; ester class such as methyl propionate, etc.; amide class such as dimethylformamide, etc.; methyl acetate; and methyl formate. Further, the electrolyte layer 6 may comprise a solid electrolyte or polymer gel electrolyte.

The lithium ion battery 1 constructed in accordance with the first embodiment can be accommodated within a battery case. The battery case may be used to protect the battery from any shock or environmental deterioration from the outside. For example, the battery case may be formed from laminate materials in which the polymer film and the metallic foil are stacked. The battery case is sealed by bonding its periphery by thermal fusion or by thermally fusing its opening in a pocket shape. The battery case is sized and configured to extract a cathode lead terminal and an anode lead terminal from the thermally fused portion. In such a case, a region for extracting each lead terminal of the cathode and anode is not specifically limited to one particular region. Further, the material for forming the battery case is not limited to the above since it may include plastic, metal, rubber or combinations thereof. Also, the shape of the battery case may include a film shape, a plate shape, a box shape, etc. Optionally, a method of extracting a current may be applied wherein a terminal for conducting inner and outer sides of the case is provided, and wherein the collector is connected to an inner side of the terminal and the lead terminal is connected to an outer side of the terminal.

In the lithium ion battery 1 of the first embodiment, gas is generated by the second cathode material 11 in the gas absorbing reinforcing cathode layer 8 due to a rise in temperature. The gas is trapped by the polymer cathode layer 12 within the gas absorbing reinforcing cathode layer 8 as soon as the gas is generated, preventing the generated gas from coexisting with the electrolytic solution gasificated at high temperatures. Further, since a low heat stability material is typically used as the second cathode material 11 in the gas absorbing reinforcing cathode layer 8, the energy can be extracted. To this end, a lithium ion battery capable of extracting the stored energy for longer periods of time is provided.

Where a cathode electrode contains polymer, the polymer traps the gas generated from the cathode active material. However, when the polymer contacts the electrolyte layer, the contact resistance therebetween increases so that the high power cannot be extracted. In contrast, the electrolytic solution type cathode layer 7 in the lithium ion battery 1 of the first embodiment does not contain polymer. Because of the absence of polymer in this layer, the contact resistance between the cathode electrode 4 and the electrolyte layer 6 is reduced. Further, since the first cathode material 9 in the electrolytic solution type cathode layer 7 has a high heat stability, gas generation is low. As such, the lithium ion battery 1 of this embodiment can withstand the temperature rise and is further capable of extracting the power for a longer life.

The polymer cathode layer 12 may contain a gel polymer. The use of a gel polymer in the polymer cathode layer 12 will extend the time before the gas generated from the second cathode material 11 during heating escapes the cathode electrode 4. Accordingly, the electrolytic solution gasificated at high temperature does not coexist with the generated gas.

The gel polymer may be prepared by adding an electrolytic solution, which is used in a known lithium ion battery, into a solid polymer electrolyte with ion conductivity. Further, the gel polymer may be prepared by retaining such an electrolytic solution in a framework of a polymer without any lithium ion conductivity. The electrolytic solution (electrolyte salt and plasticizer) may use various types of electrolytic solutions of the conventional medium, although it is certainly not limited thereto. For example, the electrolytic solution may include at least one type of lithium salt (electrolyte salt) selected from an inorganic acid anionic salt such as LiPF₆, LiBF₄, LiClO₄, LiAsF₆, LiTaF₆, LiAlCl₄ and Li₂B₁₀Cl₁₀ and/or an organic acid anionic salt such as LiCF₃SO₃, Li(CF₃SO₂)₂N and Li(C₂F₅SO₂)₂N. Further, the electrolytic solution may use a plasticizer (organic solvent) such as non-protonic solvent of one type or a combination of two or more types selected from: ring-type carbonate class such as propylene carbonate, ethylene carbonate, etc.; chain-type carbonate class such as dimethyl carbonate, methylethyle carbonate, diethyl carbonate, etc.; ether class such tetrahydrofuran, 2-methyltetrahydrofuran, 1,4-dioxane, 1,2-dimetoxyethane, 1,2-dibutoxyethane, etc.; lactone class such as γ-butyrolactone, etc.; nitrile class such as acetonitrile, etc.; ester class such as methyl propionate, etc.; amide class such as dimethylformamide, etc.; methyl acetate; and methyl formate. However, the electrolytic solution is certainly not limited thereto.

The solid polymer electrolyte with ion conductivity, for example, may include a known solid polymer electrolyte such as polyethylene oxide (PEO), polypropylene oxide (PPPO) and a copolymer thereof. Such an electrolyte is used for an all-solid polymer electrolyte. The polymer without lithium ion conductivity used for the polymer gel electrolyte may include, but is certainly not limited to, polyvinylidene fluoride (PVDF), polyvinyl chloride (PVC), polyacrylonitrile (PAN), polymethyl methacrylate (PMMA), etc. Although PAN, PMMA, etc. belong to the class having slight ion conductivity, they are mentioned here as polymers without any lithium ion conductivity.

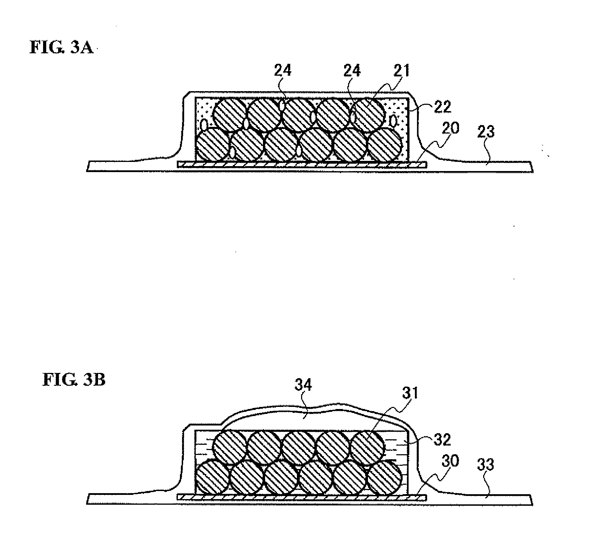

Next, an effect of trapping the gas by the gel polymer is explained using two examples. FIG. 3A is an explanatory view of heating an electrode formed by using a gel polymer. FIG. 3B is an explanatory view of heating an electrode formed by using an electrolytic solution. In FIG. 3A, the electrode formed by using the gel polymer is prepared by vacuum sealing with a laminate film. First, an electrode material 21 is obtained by applying a coating material to a collector 20 comprising aluminum and having a thickness of 20 µm. The electrode material is then dried. The coating material contains 90 wt% of lithium manganese acid having an average particle diameter of 5 µm, 5 wt% of polyvinylidene fluoride (PVdF) and 5 wt% of acetylene black. A gel polymer precursor solution in a semi-solid phase is prepared by adding 15 wt% of PEO class polymer precursor into 85 wt% of the mixing electrolytic solution (mixing volumetric ratio is 1:1) of propylene carbonate and ethylene carbonate containing LiPF₆ in a ratio of 1 mol/L, and then adding 1000 ppm of polymeric plasticizer as to polymer weight. A gel polymer layer 22 is obtained by applying and impregnating such gel polymer precursor solution into the electrode material 21 and then heating at 80°C for an hour. In the gel polymer layer 22, the electrolyte within a void of the electrode material 21 is a no-flow electrolyte. The electrode obtained as above is prepared as an electrode for an expansion evaluation by vacuum sealing with a laminate film 23 wherein both surfaces of the aluminum layer are coated by a resin layer.

In FIG. 3B, an electrode material 31 is obtained by applying a coating material to a collector 30 comprising aluminum having a thickness of 20 µm and then drying it. The coating material contains 90 wt% of lithium manganese acid having an average particle diameter of 5 µm, 5 wt% of polyvinylidene fluoride (PVdF) and 5wt% of acetylene black. An electrolytic solution layer 32 is obtained by impregnating the mixed electrolytic solution (mixing volumetric ratio is 1:1) of propylene carbonate and ethylene carbonate containing LiPF₆ in a ratio of 1 mol/L into an electrode material 31. This is to form the same amount of the electrolytic solution as FIG. 3A. The electrode thus obtained is prepared as an electrode for an expansion evaluation by vacuum sealing with a laminate film 33 wherein both surfaces of the aluminum layer are coated by a resin layer. The electrodes for evaluation obtained from FIGS. 3A and 3B are heated in a thermostat to 180°C to gasificate the electrolytic solution. Then, an expansion degree of the laminate films 23 and 33 is evaluated. While an expansion of the laminate film is observed in FIG. 3B, the same is not observed in FIG. 3A. These results indicate that while gas is generated from the electrode material 21, the gel polymer layer 22 functions to trap the gas 24. As seen in FIG. 3B, the generated gas is not trapped in the electrolytic solution layer 32 but rather forms a gas layer 34. Thus, the laminate film 33 is expanded. As no gas layer is formed with the gel polymer, the gel polymer functions to trap the generated gas.

The polymer cathode layer 12 shown in FIG. 2 may contain an all-solid polymer. With the all-solid polymer, the gas generated from the second cathode material 11 during the temperature rise is trapped within the polymer cathode layer 12. To this end, the electrolytic solution gasificated at a high temperature does not coexist with the generated gas. The all-solid polymer is a solid polymer with ion conductivity that may include, for example, a known solid polymer electrolyte such as polyethylene oxide (PEO), polypropylene oxide (PPPO) and/or a copolymer thereof.

The polymer cathode layer 12 may contain a first solid polymer with ion conductivity and a second solid polymer without any ion conductivity. That is, the second solid polymer without any ion conductivity may support the first solid polymer as a binder of the first solid polymer with ion conductivity. The first solid polymer with ion conductivity, for example, may include a known solid polymer electrolyte such as polyethylene oxide (PEO), polypropylene oxide (PPO) and/or a copolymer thereof, as mentioned above. The second solid polymer without any ion conductivity, for example, may include polyvinylidene fluoride (PVDF), polyvinyl chloride (PVC), polyacrylonitrile (PAN), polymethyl methacrylate (PMMA), etc.

The cathode electrode 4 of FIG. 2 comprises two layers, one of the electrolytic solution type cathode layer 7 and one of the gas absorbing reinforcing cathode layer 8. However, it should be noted herein that the invention is not limited to this. Alternately, the cathode electrode 4 may have one or more layers between the electrolytic solution type cathode layer 7 and the electrolyte layer 6 and between the gas absorbing reinforcing cathode layer 7 and the cathode collector 2.

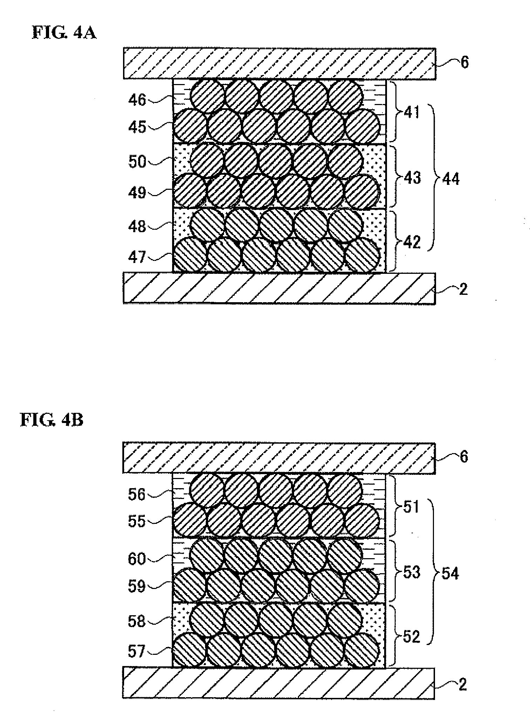

FIG. 4A is a schematic enlarged view of a main portion showing a modified example of the lithium ion battery 1 of the first embodiment. In FIG. 4A, the cathode electrode 44 comprises an electrolytic solution type cathode layer 41 contacting the electrolyte layer 6, a gas absorbing reinforcing cathode layer 42 contacting the cathode collector 2 and a gap layer 43 provided between the electrolytic solution type cathode layer 41 and the gas absorbing reinforcing cathode layer 42. The electrolytic solution type cathode layer 41 is provided with a first cathode material 45 having high heat stability and an electrolytic solution 46 supported in a support medium. The gas absorbing reinforcing cathode layer 42 is provided with a second cathode material 47 having heat stability lower than that of the first cathode material 45. The gas absorbing reinforcing cathode layer 42 is further provided with a polymer cathode layer 48 capable of trapping the gas generated from the second cathode material 47. The gap layer 43 is provided with a third electrode material 49 having heat stability identical to that of the first cathode material 45 and a polymer cathode layer 50 capable of trapping the gas generated from the third cathode material 49.

In the example shown in FIG. 4A, although the gas is generated from the second cathode material 47 (a cathode active material having low heat stability) in the gas absorbing reinforcing cathode layer 42 contacting the cathode collector 2 during the heat rise, the gas is immediately trapped by the polymer cathode layer 48 within the gas absorbing reinforcing cathode layer 42. This trapping of the gas prevents the generated gas from coexisting with the electrolytic solution gasificated at high temperatures. Further, since a low heat stability material is typically used as the second cathode material 47 in the gas absorbing reinforcing cathode layer 48, high power can be extracted. This provides a lithium ion battery that will withstand the temperature rise and is capable of extracting the stored energy. Also, since the electrolytic solution type cathode layer 41 without the polymer contacts the electrolyte layer 6, the contact resistance between the cathode electrode 44 and the electrolyte layer 6 is reduced, enabling extraction of the energy. Although the polymer cathode layer 50 capable of trapping the gas generated from the third cathode material 49 is used in the gap layer 43, it does not directly contact the electrolyte layer 6. Therefore, it does not increase the contact resistance between the cathode electrode 44 and the electrolyte layer 6.

FIG. 4B is a schematic enlarged view of a main portion showing another modified example of the lithium ion battery 1 of the first embodiment. In FIG. 4B, a cathode electrode 54 comprises an electrolytic solution type cathode layer 51 contacting the electrolyte layer 6, a gas absorbing reinforcing cathode layer 52 contacting the cathode collector 2 and a gap layer 53 provided between the electrolytic solution type cathode layer 51 and the gas absorbing reinforcing cathode layer 52. The electrolytic solution type cathode layer 51 is provided with a first cathode material 55 having high heat stability and an electrolytic solution 56 supported in a support medium. The gas absorbing reinforcing cathode layer 52 is provided with a second cathode material 57 having heat stability lower than that of the first cathode material 55 and a polymer cathode layer 58 capable of trapping the gas generated from the second cathode material 57. The gap layer 53 is provided with a third cathode material 59 having heat stability identical to that of the second cathode material 57 and an electrolytic solution 60 supported in a support medium. In the example shown in FIG. 4B, although the gas is generated from the second cathode material 57 (a cathode active material having low heat stability) in the gas absorbing reinforcing cathode layer 52 contacting the cathode collector 2 during the temperature rise, the gas is immediately trapped by the polymer cathode layer 58 within the gas absorbing reinforcing cathode layer 52. The gas is trapped by the polymer cathode layer 58 within the gas absorbing reinforcing cathode layer 52 as soon as the gas is generated, preventing the generated gas from coexisting with the electrolytic solution gasificated at high temperatures. Further, high power can be extracted since the second cathode material 57 having low heat stability is used in the polymer cathode layer 58 as well as the third cathode material 59. This provides a lithium ion battery that will withstand the temperature rise and is capable of extracting the energy. Also, since the electrolytic solution type cathode layer 51 without the polymer contacts the electrolyte layer 6, the contact resistance between the cathode electrode 54 and the electrolyte layer 6 is reduced, allowing for the stored energy to be extracted for extended battery life.

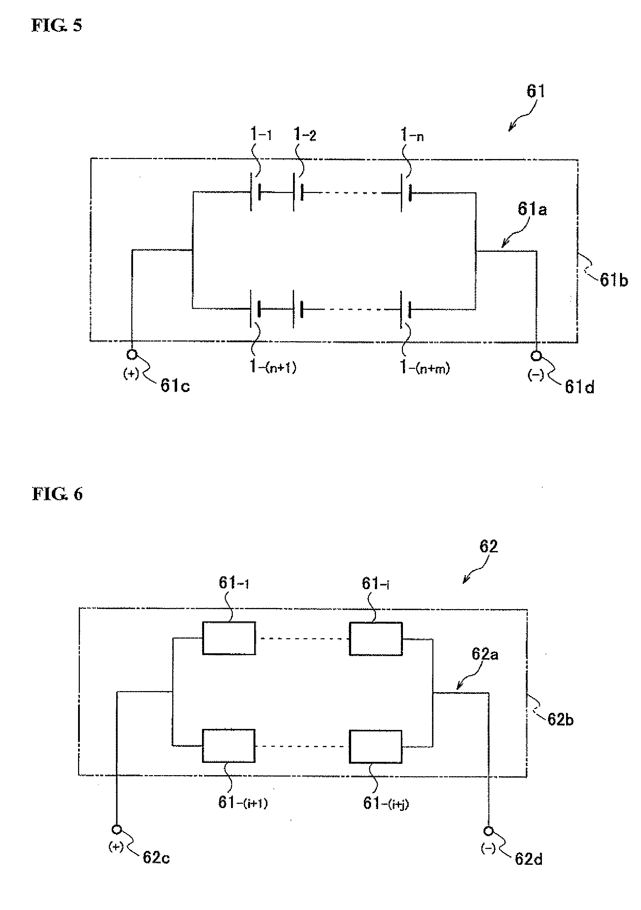

A battery assembly 61 constructed in accordance with a second embodiment of the invention is shown in FIG. 5, which is a circuit diagram of the battery assembly 61. The battery assembly 61 comprises a serial-parallel circuit 61 a of (n+m)-lithium ion batteries [1-1 to 1-(n+m)] and a container 61 b configured to house the serial-parallel circuit 61 a. The (n+m)-lithium ion batteries [1-1 to 1-(n+m)] are formed by connecting a serial circuit of n (n≥1)-lithium ion battery (1-1 to 1-n) and a serial circuit of m (m≥1)-lithium ion battery [1-(n+1) to 1-(n+m)] in parallel. A cathode terminal 61 c and an anode terminal 61d of the serial-parallel circuit 61 a are provided outside of the container 61 b.

The (n+m)-lithium ion batteries [1-1 to 1-(n+m)] have the same constitution as the lithium ion battery 1 of the first embodiment. To this end, the battery assembly 61 can achieve the same effect as the lithium ion battery 1 of the first embodiment in that a lithium ion battery is provided that will withstand the temperature rise and is capable of extracting the energy. Optionally, a plurality of the serial-parallel circuits 61a may be connected in series.

A battery assembly module 62 constructed in accordance with a third embodiment of the invention is shown in FIG. 6, which is a block diagram. The battery assembly module 62 shown comprises a serial-parallel circuit 62a of (i+j)-battery assemblies [61-1 to 61- (i+j)] and a container 62b configured to house the serial-parallel circuit 62a. The (i+j)-battery assemblies [61-1 to 61- (i+j)] are formed by connecting a serial circuit of i(i ≥ 1)-battery assembly [61-1 to 61-i] and a serial circuit of j(j ≥ 1)-battery assembly [61-(i+1) to 61-(i+j)] in parallel. A cathode terminal 62c and an anode terminal 62d of the serial-parallel circuit 62a are provided outside of the container 62b.

The (i+j)-battery assemblies [61-1 to 61-(i+j)] have the same constitution as the lithium ion battery 61 of FIG. 5. This provides a lithium ion battery that will withstand the temperature rise and is capable of extracting the energy. Optionally, a plurality of the serial-parallel circuits 62a may be connected in series.

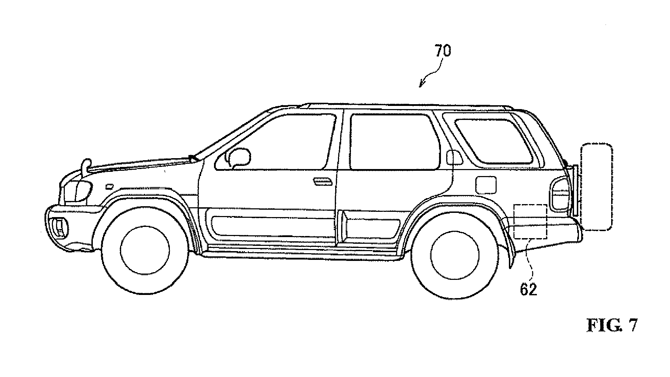

A vehicle 70 constructed in accordance with a fourth embodiment of the invention is shown in FIG. 7, where FIG. 7 is a side view of the vehicle 70 in which the battery assembly module 62 of the third embodiment is installed and mounted. The battery assembly module 62 can be installed at a bottom of the vehicle, a trunk room, an engine room, a loop, an inside of a bonnet hood, etc. The battery assembly module 62 is suitable for a battery or the drive power source used in a vehicle requiring a strict capacity or power characteristic. Use of such a battery assembly module in, for example, an electric vehicle, a fuel cell vehicle or a hybrid electric vehicle provides a vehicle having a superior driving performance.

The above-described embodiments have been described in order to allow easy understanding of the invention and do not limit the invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application No. 2006-318780, filed 27th November 2006, the contents of which are expressly incorporated herein by reference.

## Claims

1. A lithium ion battery, comprising:
an anode electrode;
a cathode electrode comprising an electrolytic solution type cathode layer and a gas absorbing reinforcing cathode layer; and
an electrolyte layer between the anode electrode and cathode electrode, the electrolyte layer comprising an electrolytic solution in a support medium.

2. A lithium ion battery as claimed in claim 1 wherein the electrolytic solution type cathode layer is in contact with the electrolyte layer opposite the anode electrode.

3. A lithium ion battery as claimed in claim 1 or claim 2 wherein the electrolytic solution type cathode layer comprises a first cathode material and an electrolytic solution, and wherein the gas absorbing reinforcing cathode layer comprises a polymer cathode layer and a second cathode material, the first cathode material having a higher heat stability than the second cathode material.

4. A lithium ion battery as claimed in claim 3, wherein the polymer cathode layer comprises a first solid polymer with an ion conductivity and a second solid polymer without an ion conductivity.

5. A lithium ion battery as claimed in claim 3 or claim 4, wherein the cathode electrode includes a gap layer between the electrolytic solution type cathode layer and the gas absorbing reinforcing cathode layer.

6. A lithium ion battery as claimed in claim 5, wherein the gap layer comprises a second polymer cathode layer and a third cathode material, and wherein the third cathode material has a same heat stability as the first cathode material.

7. A lithium ion battery as claimed in claim 5, wherein the gap layer comprises a second electrolytic solution layer and a third cathode material, and wherein the third cathode material has the same heat stability as the second cathode material.

8. A lithium ion battery as claimed in any of claims 3 to 7, wherein the polymer cathode layer and/or the second polymer cathode layer comprises:
a gel polymer or polymers; and/or
a solid polymer or polymers.

9. A battery assembly comprising a plurality of lithium ion batteries as claimed in any preceding claim.

10. A battery assembly module comprising a plurality of battery assemblies as claimed in claim 9.

11. A vehicle comprising the a lithium ion battery, a battery assembly or a battery assembly module as claimed in any preceding claim.

12. A method of manufacturing a cathode electrode of a lithium ion battery, the method comprising:
applying a precursor solution of a gas absorbing reinforcing cathode layer on a collection foil;
drying the applied precursor solution of the gas absorbing reinforcing cathode layer;
applying a precursor solution of an electrolytic solution type cathode layer; and
drying the applied precursor solution of the electrolytic solution type cathode layer.

13. A method as claimed in claim 12, wherein the gas absorbing reinforcing cathode layer comprises a gel polymer layer, the method comprising:
applying and impregnating a gel polymer precursor solution into an electrode material; and
heating prior to applying the precursor solution of the gas absorbing reinforcing cathode layer to the collection foil.
